# FASCICULE DE BREVET EUROPEEN

(11) **EP 3 004 619 B1**
(45) Date de publication et mention de la délivrance du brevet: **21.06.2017**
(21) Numéro de dépôt: 14725230.8
(22) Date de dépôt: 16.04.2014
(51) Int. Cl.: F02M 26/43, F02M 26/00, F02D 41/00, F02D 9/10, F01N 13/10, F02M 35/10

(54) **DISPOSITIF DE RECIRCULATION VARIABLE DE GAZ D'ECHAPPEMENT**
VARIABLE AGR ANORDNUNG
VARIABLE EGR DEVICE

(30) Priorité: 23.05.2013 FR 1354662
(43) Date de publication de la demande: 13.04.2016
(73) Titulaire: Peugeot Citroën Automobiles SA, 78140 Vélizy Villacoublay (FR)
(72) Inventeur: RIBAULT-MENETIERE, Martin, F-75012 Paris (FR); DENYS, Fabien, F-59300 Valenciennes (FR); LASCOUX, Herve, F-95370 Montigny Les Cormeilles (FR); NOVATI, Jean, F-78420 Carrieres Sur Seine (FR); GENIN, Frederic, F-94460 Valenton (FR)
(74) Mandataire: Renous Chan, Véronique
(86) Numéro de dépôt international: PCT/FR2014/050931
(87) Numéro de publication internationale: WO 2014/188097

(56) Documents cités:
- DE-A1- 3 332 034
- DE-A1-102006 028 281
- JP-A- H0 849 577
- US-A1- 2012 260 895

## Description

L'invention concerne un dispositif de recirculation de gaz d'échappement pour un moteur à combustion interne et allumage commandé, et plus particulièrement pour un moteur ayant une pluralité de cylindres dont au moins un cylindre est dédié entièrement à la recirculation de ses gaz d'échappement. L'invention concerne également un moteur à combustion interne et allumage commandé équipé d'un tel dispositif de recirculation de gaz d'échappement.

Le document US-A-2009/0308070 décrit un concept de moteur à combustion interne avec allumage commandé où un (ou plusieurs) cylindre(s) est (sont) dédié(s) entièrement à la recirculation de ses (leurs) gaz d'échappement à l'admission. Ce (ou chacun des) cylindre(s) est enrichi afin d'engendrer une production d'hydrogène, augmentée par réaction chimique grâce à un catalyseur situé sur la ligne de recirculation des gaz d'échappement. L'hydrogène permet au moteur d'avoir une bonne combustion et de supporter des taux de compression élevés, comparés à ceux de moteurs conventionnels (plus de 13 : 1 contre 11 : 1 maximal en conventionnel). L'avantage en est que plus le taux de compression est élevé, plus le rendement du moteur est bon. Ce concept permet donc d'augmenter le rendement du moteur et de baisser ainsi la consommation de carburant. Le document US 2012/260895 A1 divulgue un dispositif de recirculation de gaz d'échappement où au moins un cylindre est dédié entièrement à la recirculation de gaz d'échappement, ceci comprenant un moyen adaptée pour contrôler le flux d'admission d'un mélange d'air et de gaz d'échappement.

Cependant, la principale limite de ce concept est donnée par le fait que le taux de recirculation des gaz d'échappement (par la suite : taux d'EGR ou « Exhaust Gas Recirculation » en anglais) est fixe. De plus, la production d'hydrogène est limitée à l'enrichissement maximal supportable par la chambre de combustion du cylindre dédié à l'EGR. L'ensemble formé par le taux d'EGR élevé et la production d'hydrogène permet de définir le taux maximal de compression du moteur où le cliquetis ne dépasse pas les limites supportables par le moteur.

Dans un moteur à quatre cylindres, le concept de dédier un cylindre entièrement à la recirculation de ses gaz d'échappement, a pour effet que quels que soient la charge et le régime du moteur, chaque cylindre reçoit 25 % des gaz d'échappement. Avec un taux d'EGR de 25 %, il n'est pas possible de dépasser un taux de compression de 14 : 1.

Le but de l'invention est de proposer une possibilité pour augmenter le taux d'EGR encore davantage et d'augmenter ainsi le taux de compression et, en conséquence, le rendement du moteur pour baisser la consommation de carburant.

Le but de l'invention est atteint avec un dispositif de recirculation de gaz d'échappement pour un moteur à combustion interne ayant une pluralité de cylindres dont au moins un cylindre est dédié entièrement à la recirculation de ses gaz d'échappement, le dispositif comprenant, pour chaque cylindre non dédié à la recirculation de gaz d'échappement, un moyen adapté pour contrôler le flux d'admission d'un mélange d'air et de gaz d'échappement, ce moyen étant destiné à être disposé à l'entrée du cylindre et pilotable par un dispositif de contrôle moteur.

Avantageusement, le moyen pilotable se présente sous la forme d'un moyen d'étranglement.

De préférence, le moyen pilotable se présente sous la forme d'un volet ou d'une valve papillon.

En disposant à l'entrée de chacun des cylindres non dédiés à la recirculation de leurs gaz d'échappement, un moyen pilotable contrôlant le flux de mélange air/gaz d'échappement, le taux d'EGR résultant de la répartition à parts égales des gaz d'échappement devient le taux minimal d'EGR qui est augmenté à un taux supérieur par une réduction variable du flux d'admission. Pour l'exemple mentionné plus haut d'un moteur à quatre cylindres, ce taux d'EGR minimal est de 25 %. La possibilité d'accroître le taux d'EGR donne la capacité d'augmenter le taux de compression du moteur, gage d'un rendement amélioré du moteur, et de baisser ainsi la consommation de ce dernier.

Le but de l'invention est également atteint par un procédé de commande d'un dispositif de recirculation de gaz d'échappement pour un moteur à combustion interne ayant une pluralité de cylindres dont au moins un cylindre est dédié entièrement à la recirculation de ses gaz d'échappement, le dispositif de recirculation comprenant, pour chaque cylindre non dédié à la recirculation de gaz d'échappement, un moyen adapté pour contrôler le flux d'admission d'un mélange d'air et de gaz d'échappement, ce moyen étant disposé à l'entrée du cylindre, le procédé de commande comprenant une étape de pilotage de la fermeture du moyen de control du flux d'admission par un dispositif de contrôle moteur.

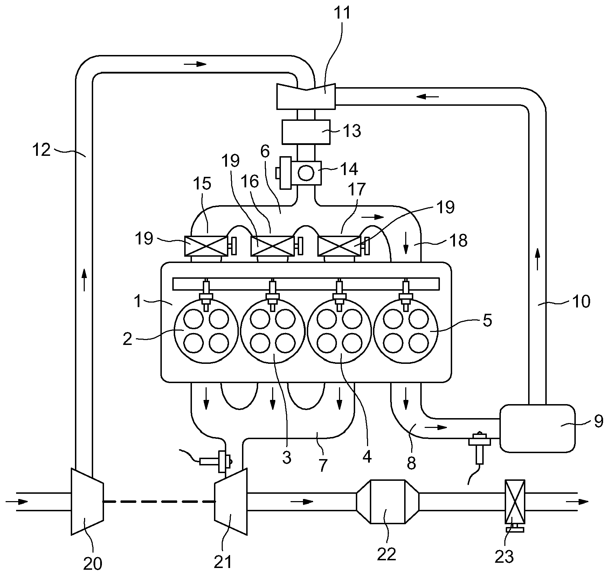

D'autres caractéristiques et avantages de la présente invention ressortiront de la description d'un exemple non limitatif de réalisation en référence à la figure unique jointe qui représente le cheminement de l'air et des gaz d'échappement dans un moteur à combustion interne à allumage commandé ayant quatre cylindres dont un seul est dédié entièrement à la recirculation de ses gaz d'échappement. En effet, l'invention n'est pas limitée à l'exemple représenté mais s'applique aussi à bien d'autres architectures de moteurs, par exemple à d'autres nombre de cylindres que quatre et à d'autres nombres de cylindres qu'un seul dédié entièrement à l'EGR. De plus, dans l'exemple choisi, la recirculation d'EGR se fait en amont du dispositif de refroidissement de l'air de suralimentation, alors qu'il est également possible de la faire en aval dudit dispositif de refroidissement ou d'utiliser une double suralimentation.

D'autres particularités et avantages apparaîtront à la lecture de la description ci-après d'un mode particulier de réalisation, non limitatif de l'invention, faite en référence à la figure unique représentant une architecture de moteur de l'invention.

En référence à la figure unique, ce moteur est représenté par un bloc moteur 1 ayant quatre cylindres 2, 3, 4, 5, un bloc unique d'admission 6 pour les quatre cylindres, un collecteur de gaz d'échappement 7 pour les cylindres 2 à 4, et un conduit d'échappement 8 pour l'acheminement des gaz d'échappement du cylindre 5 vers un catalyseur 9 à partir duquel ces gaz d'échappement sont recirculés par un conduit 10 pour être réintroduits dans le moteur 1.

Le conduit 10 débouche dans un mélangeur 11 dans lequel débouche également un conduit 12 amenant de l'air frais. Le mélange air / gaz d'échappement passe par un dispositif de refroidissement (intercooler) 13 et un volet d'admission 14 avant d'arriver au bloc d'admission 6. Le bloc d'admission 6 comprend quatre lignes d'admission 15 à 18 répartissant le mélange air / gaz d'échappement sur les entrées des quatre cylindres 2 à 5.

Selon ce qui est également visible sur la Figure unique, le moteur 1 est suralimenté, c'est-à-dire l'air frais arrivant par le conduit 12 est passé auparavant par un compresseur 20 entraîné par une turbine 21 qui, elle, est entraînée par les gaz d'échappement sortant des trois cylindres 2 à 4 non dédiés à la recirculation de leurs gaz d'échappement. Ces gaz d'échappement sont évacués par un système catalytique 22 et une valve de sortie 23.

En ce qui concerne la recirculation des gaz d'échappement selon la présente invention, la Figure unique montre que les lignes d'admission 15 à 17 comportent chacune un volet 19, par exemple une valve papillon, relié à un contrôle moteur non représenté pour être fermé à des degrés différents selon des critères prédéterminés de commande du moteur.

En fermant les volets 19, une contrepression est créée, ce qui réduit la quantité de mélange air / gaz d'échappement, et par là la quantité d'air frais, admise par les lignes d'admission 15 à 17 dans les cylindres 2 à 4 non dédiés à l'EGR. Du fait de la réduction de la quantité d'air frais, le taux d'EGR à l'admission sera plus important.

En revanche, le cylindre 5 n'est pas impacté et reçoit davantage de mélange air / gaz d'échappement et donc davantage d'air, ce qui conduit à une augmentation de la production d'hydrogène et donc de la concentration d'hydrogène dans les gaz recirculés.

La réduction quantitative des gaz d'échappement recirculés qui sont admis dans les trois cylindres non dédiés à la recirculation de leurs gaz d'échappement, d'un côté, et l'augmentation de la production d'hydrogène dans la ligne de recirculation des gaz d'échappement, d'autre côté, permettent une augmentation du rendement du moteur et, enfin, une réduction de la consommation de carburant.

En effet, comme déjà indiqué plus haut, une augmentation du taux d'EGR permet de reculer la limite du taux de compression que le moteur peut supporter. Ce taux de compression étant limité par la résistance du moteur au cliquetis dans des zones sensibles de fonctionnement, il est avantageux d'augmenter le taux de compression du moteur par rapport à sa limite théorique en augmentant le taux d'EGR et la production d'hydrogène dans des zones à risques pouvant engendrer du cliquetis. Dans les autres zones, donc les zones moins sensibles, le taux d'EGR est alors réduit à sa valeur classique afin de ne pas étouffer le moteur et garder des performances identiques.

Le taux de compression étant relevé par rapport à sa limite précédente, le rendement moteur se trouve alors augmenté, baissant encore d'autant la consommation de carburant.

L'avantage de l'invention est de pouvoir augmenter le taux de compression et ainsi le rendement du moteur sans encourir les risques de casse mécanique. De plus, l'invention n'a que peu d'impacte sur l'architecture du moteur, elle implique un changement de pistons et le rajout de valves papillons (pièces existantes) sur chaque primaire des cylindres non dédiés.

## Revendications

1. Dispositif de recirculation de gaz d'échappement pour un moteur à combustion interne (1) ayant une pluralité de cylindres (2 à 5) dont au moins un cylindre (5) est dédié entièrement à la recirculation de ses gaz d'échappement,
**caractérisé en ce qu'**il comprend, pour chaque cylindre (2 à 4) non dédié à la recirculation de gaz d'échappement, un moyen (19) adapté pour contrôler le flux d'admission d'un mélange d'air et de gaz d'échappement, ce moyen (19) étant destiné à être disposé à l'entrée du cylindre (2 à 4) et pilotable par un dispositif de contrôle moteur.

2. Dispositif selon la revendication 1, **caractérisé en ce que** le moyen (19) pilotable est un moyen d'étranglement.

3. Dispositif selon la revendication 1 ou 2, **caractérisé en ce que** le moyen pilotable est un volet (19).

4. Moteur suralimenté à combustion interne et allumage commandé ayant une pluralité de cylindres (2 à 5) dont au moins un cylindre (5) est dédié entièrement à la recirculation de ses gaz d'échappement, **caractérisé en ce qu'**il comprend un dispositif de recirculation de gaz d'échappement selon l'une des revendications 1 à 3.

5. Procédé de commande d'un dispositif de recirculation de gaz d'échappement pour un moteur à combustion interne (1) ayant une pluralité de cylindres (2 à 5) dont au moins un cylindre (5) est dédié entièrement à la recirculation de ses gaz d'échappement, le dispositif de recirculation comprenant, pour chaque cylindre (2 à 4) non dédié à la recirculation de gaz d'échappement, un moyen (19) adapté pour contrôler le flux d'admission d'un mélange d'air et de gaz d'échappement, ce moyen (19) étant disposé à l'entrée du cylindre (2 à 4),
**caractérisé en ce qu'**il comprend une étape de pilotage de la fermeture du moyen de control (19) du flux d'admission par un dispositif de contrôle moteur.

## Patentansprüche

1. Abgasrückführvorrichtung für eine Brennkraftmaschine (1), die eine Vielzahl von Zylindern (2 bis 5) hat, von welchen mindestens ein Zylinder (5) vollständig der Rückführung seiner Abgase gewidmet ist,
**dadurch gekennzeichnet, dass** sie für jeden Zylinder (2 bis 4), der nicht der Abgasrückführung gewidmet ist, ein Mittel (19) umfasst, das angepasst ist, um den Saugfluss eines Gemischs aus Luft und Abgasen zu steuern, wobei dieses Mittel (19) dazu bestimmt ist, am Eingang des Zylinders (2 bis 4) angeordnet und durch eine Maschinensteuervorrichtung steuerbar zu sein.

2. Vorrichtung nach Anspruch 1, **dadurch gekennzeichnet, dass** das steuerbare Mittel (19) ein Drosselmittel ist.

3. Vorrichtung nach Anspruch 1 oder 2, **dadurch gekennzeichnet, dass** das steuerbare Mittel eine Klappe (19) ist.

4. Aufgeladene Brennkraftmaschine mit gesteuerter Zündung, die eine Vielzahl von Zylindern (2 bis 5) hat, von welchen mindestens ein Zylinder (5) vollständig der Rückführung seiner Abgase gewidmet ist, **dadurch gekennzeichnet, dass** sie eine Abgasrückführvorrichtung nach einem der Ansprüche 1 bis 3 umfasst.

5. Verfahren zum Steuern einer Abgasrückführvorrichtung für Brennkraftmaschine (1), die eine Vielzahl von Zylindern (2 bis 5) hat, von welchen mindestens ein Zylinder (5) vollständig der Rückführung seiner Abgase gewidmet ist, wobei die Rückführvorrichtung für jeden Zylinder (2 bis 4), der nicht der Abgasrückführung gewidmet ist, ein Mittel (19) umfasst, das angepasst ist, um den Ansaugfluss eines Gemischs aus Luft und Abgasen zu steuern, wobei das Mittel (19) am Eingang des Zylinders (2 bis 4) angeordnet ist,
**dadurch gekennzeichnet, dass** es einen Schritt des Steuerns des Schließens des Steuermittels (19) des Ansaugflusses durch eine Maschinensteuervorrichtung umfasst.

## Claims

1. A device for the recirculation of exhaust gas for an internal combustion engine (1) having a plurality of cylinders (2 to 5), of which at least one cylinder (5) is dedicated entirely to the recirculation of its exhaust gases,
**characterized in that** it includes, for each cylinder (2 to 4) not dedicated to the recirculation of exhaust gas a means (19) suitable for controlling the admission flow of a mixture of air and of exhaust gas, this means (19) being intended to be disposed at the inlet of the cylinder (2 to 4) and able to be driven by an engine control device.

2. The device according to Claim 1, **characterized in that** the drivable means (19) is a throttling means.

3. The device according to Claim 1 or 2, **characterized in that** the drivable means is a flap (19).

4. A supercharged internal combustion engine with positive ignition, having a plurality of cylinders (2 to 5), of which at least one cylinder (5) is dedicated entirely to the recirculation of its exhaust gases, **characterized in that** it includes a device for recirculation of exhaust gas according to one of Claims 1 to 3.

5. A method for controlling a device for recirculation of exhaust gas for an internal combustion engine (1) having a plurality of cylinders (2 to 5), of which at least one cylinder (5) is dedicated entirely to the recirculation of its exhaust gases, the recirculation device including, for each cylinder (2 to 4) not dedicated to the recirculation of exhaust gas a means (19) suitable for controlling the admission flow of a mixture of air and of exhaust gas, this means (19) being disposed at the inlet of the cylinder (2 to 4),
**characterized in that** it includes a driving step of the closure of the control means (19) of the admission flow by an engine control device.
